# DEMANDE DE BREVET EUROPEEN

(11) **EP 4 814 320 A1**
(43) Date de publication de la demande: **30.09.2026**
(21) Numéro de dépôt: 26164476.9
(22) Date de dépôt: 12.03.2026
(51) Int. Cl.: F16B 5/06, F16B 21/08, F16B 39/24

(54) **ENSEMBLE DE FIXATION ADAPTÉ À LA FIXATION SÉCURISÉE ET SIMPLIFIÉE D'UN PANNEAU SUR UN CHÂSSIS DE VÉHICULE AUTOMOBILE**

(30) Priorité: 28.03.2025 FR 2503259
(71) Demandeur: Lisi Automotive Rapid, 95650 Puiseux-Pontoise (FR)
(72) Inventeur: OLIVIER, William, 92400 Courbevoie (FR)
(74) Mandataire: Weinstein Services & Conseils

(57) **Abrégé**

L'invention porte principalement sur un ensemble de fixation d'une première pièce (25) sur une seconde pièce comprenant un système de fixation (1) monté sur la première pièce (25) et sur la seconde pièce, lequel système de fixation (1) comprend :
une pièce d'ancrage (2) comportant une ancre de fixation (5) muni de deux ailettes (9a,9b), chaque ailette (9a,9b) étant apte à adopter au moins une position repliée, et une position déployée, et
une bague de maintien (3) destinée à être apposée sur la première pièce (25) comportant un orifice traversant (18) qui est destiné à coïncider avec un orifice traversant (28) ménagé sur ladite première pièce (25) et dans lequel est logée l'ancre de fixation (5) en position d'utilisation,
le système comportant des moyens de pivotement de la pièce d'ancrage (2) relativement à la bague de maintien (3).

## Description

### DOMAINE TECHNIQUE DE L'INVENTION

L'invention s'inscrit dans le domaine des fixations, et concerne plus particulièrement un système de fixation particulièrement adapté pour monter un panneau sur une carrosserie automobile.

### ARRIERE-PLAN TECHNOLOGIQUE DE L'INVENTION

De manière connue, la fixation de panneau sur des châssis de type automobile est réalisée en positionnant le panneau contre le châssis, lequel châssis comprend des goujons filetés en saillie qui passent au travers d'orifices ménagés dans le panneau, puis en y vissant des boulons pour fixer le panneau contre le châssis sans qu'aucun jeu mécanique ne subsiste.

Ces fixations par vissage sont souvent fastidieuses pour un opérateur, en plus de prendre beaucoup de temps. En outre, le poids des vis et leurs coûts engendrent des coûts globaux trop élevés.

Dans ce contexte, l'invention vise un ensemble de fixation adapté à la fixation d'une première pièce, par exemple un panneau, sur une seconde pièce, par exemple un châssis de véhicule automobile, qui est moins fastidieux à manipuler pour l'opérateur et à la fois simple et peu coûteux de conception.

### RESUME DE L'INVENTION

Dans ce contexte, l'invention vise un système de fixation d'une première pièce, par exemple un panneau, sur une seconde pièce, par exemple un châssis de véhicule automobile, lequel système est destiné à être monté sur la première pièce et comprend :
- une pièce d'ancrage comportant une base surmontée d'une ancre de fixation qui présente un tronc central et au moins deux ailettes s'étendant de part et d'autre et depuis ledit tronc central jusqu'à une extrémité libre inférieure, chaque ailette étant apte à adopter au moins une position repliée vers le tronc central, et une position déployée d'équilibre dans laquelle l'extrémité libre inférieure est à distance du tronc central, chaque ailette présentant en outre une face externe dotée d'un épaulement de maintien de la seconde pièce, et
- une bague de maintien destinée à être apposée sur la première pièce et comportant une pièce principale de support sur laquelle est ménagé un orifice traversant qui est destiné à coïncider avec un orifice traversant correspondant ménagé sur ladite première pièce et dans lequel est logée l'ancre de fixation en position d'utilisation, le tronc central faisant saillie de l'orifice traversant de la bague de maintien, et les extrémités libres des ailettes étant en appui de contact contre le bord interne dudit orifice traversant, lequel orifice traversant présente un premier diamètre pour lequel les ailettes de l'ancre de fixation sont en position déployée contre le bord interne de l'orifice, et un second diamètre, inférieur au premier diamètre, pour lequel les ailettes de l'ancre de fixation sont en position repliée contre le bord interne de l'orifice,
le système comportant des moyens de pivotement de la pièce d'ancrage relativement à la bague de maintien qui assurent le passage de la position déployée à la position repliée des ailettes au niveau de l'orifice traversant et la désolidarisation concomitante du système de fixation de la seconde pièce.

Le système de fixation de l'invention peut également comporter les caractéristiques optionnelles suivantes considérées isolément ou selon toutes les combinaisons techniques possibles :
- le tronc central s'étend transversalement dans un plan perpendiculaire à un plan formé par les deux ailettes en formant deux crêtes opposées, la face externe de chaque crête présentant un épaulement de fixation à la bague de maintien, lequel épaulement de fixation à la bague de maintien définit, avec l'épaulement de maintien de la seconde pièce ménagé sur la face externe de chaque ailette, une hauteur correspondant à l'épaisseur maximum de la seconde pièce destinée à être en prise entre les épaulements de maintien de la seconde pièce et la bague de maintien.
- la plus grande distance entre les faces externes respectives des crêtes opposées est inférieure à la distance entre les épaulements de maintien de la seconde pièce des ailettes en position déployée définissant le plus grand diamètre de l'ancre de fixation.
- les moyens de pivotement de la pièce d'ancrage relativement à la bague de maintien comporte une rainure ménagée sur la face inférieure de la base de la pièce d'ancrage.
- la bague de maintien comporte au moins une patte déformable s'étendant obliquement depuis la pièce principale de support jusqu'à un bord d'extrémité libre, laquelle patte déformable est apte à adopter une pluralité de positions plus ou moins obliquement à distance de la pièce principale de support de ladite bague de maintien.

Un autre aspect de l'invention concerne un ensemble de fixation d'une première pièce, par exemple un panneau, sur une seconde pièce, par exemple un châssis de véhicule automobile, comprenant un système de fixation monté sur la première pièce, laquelle première pièce présente une face supérieure et une face inférieure, lequel système de fixation comprend :
- une pièce d'ancrage selon l'une quelconque des revendications précédentes, comportant une base surmontée d'une ancre de fixation qui présente un tronc central et au moins deux ailettes s'étendant de part et d'autre et depuis ledit tronc central jusqu'à une extrémité libre inférieure, chaque ailette étant apte à adopter au moins une position repliée vers la tige centrale (8), et une position déployée d'équilibre dans laquelle l'extrémité libre inférieure est à distance de la tige centrale, chaque ailette présentant en outre une face externe dotée d'un épaulement de maintien de la seconde pièce, et
- une bague de maintien apposée sur la face supérieure de la première pièce et comportant un orifice traversant qui coïncide avec un orifice traversant correspondant ménagé sur ladite première pièce et dans lequel est logée l'ancre de fixation, la base de la pièce d'ancrage étant en appui contre la face inférieure de la première pièce, le tronc central de l'ancre de fixation faisant saille des deux orifices traversants du côté de la bague de maintien et les extrémités libres des ailettes étant en appui de contact contre le bord interne de l'orifice traversant de la bague de maintien, lequel orifice traversant présente un premier diamètre pour lequel les ailettes de l'ancre de fixation sont en position déployée contre le bord interne de l'orifice, et un second diamètre inférieur au première diamètre, pour lequel les ailettes de l'ancre de fixation sont en position repliée, le système comportant des moyens de pivotement de la pièce d'ancrage relativement à la bague de maintien qui assurent le passage de la position déployée à la position repliée des ailettes au niveau de l'orifice traversant, le passage de la position déployée des ailettes à la position repliée s'opérant ainsi par rotation de la pièce d'ancrage relativement à la bague de maintien, ce dont il résulte la désolidarisation du système de fixation de la seconde pièce,
le diamètre de l'orifice traversant de la première pièce étant au moins égal à la distance entre les épaulements de maintien de la seconde pièce des ailettes considérées en position repliée et au moins égal à la distance entre les faces externes respectives des crêtes opposées.

L'ensemble de fixation de l'invention peut également comporter les caractéristiques optionnelles suivantes considérées isolément ou selon toutes les combinaisons techniques possibles :
- la partie inférieure du tronc central de l'ancre de fixation présente une embase qui est disposé au niveau de l'orifice traversant de la première pièce, et dont le diamètre est inférieur au diamètre de l'orifice traversant de la première pièce.
- la première pièce est un panneau qui présente un embossage circulaire définissant une partie supérieure plane en élévation sur laquelle est ménagé l'orifice traversant, et un bord de liaison arrondi circulaire, et la pièce principale de support de la bague de maintien présente une partie principale plane en appui sur la face supérieure de la partie plane de l'embossage circulaire du panneau et un bord arrondi de configuration générale circulaire en appui sur au moins une partie du bord circulaire de liaison arrondi de l'embossage.
- la partie plane en élévation de l'embossage du panneau présente deux butées diamétralement opposées, et la bague de maintien présente deux échancrures diamétralement opposées entourant chacune une butée, de sorte que la bague de maintien soit maintenue fixe sur la première pièce par contact en butée des échancrures contre les butées correspondantes lorsque la pièce d'ancrage est actionnée en pivotement.
- la largeur de chaque échancrure est supérieure à la largeur de la butée correspondante, de sorte que, en coopération avec le diamètre de l'embase de l'ancre de fixation qui est inférieur au diamètre de l'orifice traversant de la première pièce, le système de fixation peut être monté sur la première pièce selon un jeu contrôlé.
- la partie plane en élévation de l'embossage de la première pièce présente deux butées supplémentaires diamétralement opposées, la hauteur des quatre butées étant identique et adaptée à l'épaisseur de la seconde pièce destinée à venir en prise dans l'ensemble de fixation.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence aux figures annexées, qui illustrent :
[Fig. 1] la [Fig. 1] est une représentation schématique en perspective et en éclaté d'une partie de l'ensemble de fixation de l'invention représentée sans la seconde pièce ;
[Fig. 2] la [Fig. 2] est une représentation schématique en perspective d'une partie de l'ensemble de fixation de l'invention après montage du système de fixation de l'invention sur la première pièce ;
[Fig. 3] la [Fig. 3] est une représentation schématique en perspective et en coupe d'une partie de l'ensemble de fixation de l'invention représentée sans la seconde pièce selon le plan AA' définit par les ailettes de l'ancre de fixation ;
[Fig. 4] la [Fig. 4] est une représentation schématique en coupe d'une partie de l'ensemble de fixation de l'invention représentée sans la seconde pièce selon le plan AA' défini par les ailettes de l'ancre de fixation;
[Fig. 5] la [Fig. 5] est une représentation schématique en coupe selon le plan BB' du tronc central de l'ancre de fixation d'une partie de l'ensemble de fixation de l'invention représentée sans la seconde pièce, et d'une partie agrandie de l'épaulement de fixation à la bague de maintien ménagée sur une crête dudit tronc central ;
[Fig. 6] la [Fig. 6] est une représentation schématique de face et en élévation de la bague de maintien de l'ensemble de fixation de l'invention ;
[Fig. 7A] la [Fig. 7A] est une représentation schématique en coupe de la bague de maintien et de la pièce d'ancrage pour laquelle les ailettes de l'ancre de fixation sont en position déployée contre le bord interne de l'orifice de la bague de maintien ;
[Fig. 7B] la [Fig. 7B] est une représentation schématique en coupe de la bague de maintien et de la pièce d'ancrage pour laquelle les ailettes de l'ancre de fixation sont en position repliée contre le bord interne de l'orifice de la bague de maintien après pivotement de la pièce d'ancrage relativement à la bague de maintien ;
[Fig. 8A] la [Fig. 8A] est une représentation schématique de face et en élévation de l'ensemble de fixation de l'invention selon la flèche VIIIA de la figure 2 ainsi que de la seconde pièce, centrée sur la pièce d'ancrage pour laquelle les ailettes de l'ancre de fixation sont en position déployée, les épaulements des ailettes de l'ancre de fixation reposant sur la seconde pièce en la maintenant solidaire de l'ensemble de fixation;
[Fig. 8B] la [Fig. 8B] est la même représentation que la figure 8A de l'ensemble de fixation et de la seconde pièce, pour laquelle les ailettes de l'ancre de fixation sont en position repliée après pivotement de la pièce d'ancrage relativement à la bague de maintien;
[Fig. 9] la [Fig. 9] est une représentation schématique en perspective de la face inférieure de la base de la pièce d'ancrage de l'ensemble de fixation de l'invention, sur laquelle face inférieure est ménagée une rainure de pivotement de la pièce d'ancrage relativement à la bague de maintien ;
[Fig. 10] la [Fig. 10] est une représentation schématique en perspective de la première étape de montage de l'ensemble de fixation de l'invention sur la seconde pièce, par exemple un châssis de véhicule automobile pour laquelle le système de fixation préalablement monté sur la première pièce est approché de l'orifice ménagé sur la seconde pièce;
[Fig. 11] la [Fig. 11] est une représentation schématique en perspective et en coupe selon le plan AA' défini par les ailettes de l'ancre de fixation de l'ensemble de fixation de l'invention monté et fixé sur la seconde pièce ;
[Fig. 12] la [Fig. 12] est une représentation schématique en en coupe selon le plan AA' défini par les ailettes de l'ancre de fixation de l'ensemble de fixation de l'invention monté et fixé sur la seconde pièce, la partie gauche de la figure représentant l'ensemble de fixation adapté à une seconde pièce d'épaisseur maximum et la partie droite de la figure représentant l'ensemble de fixation adapté à une seconde pièce de plus faible épaisseur ;
[Fig. 13] la [Fig. 13] est une représentation schématique en perspective et en coupe selon le plan AA' défini par les ailettes de l'ancre de fixation de l'ensemble de fixation de l'invention après pivotement de la pièce d'ancrage relativement à la bague de maintien et passage des ailettes de l'ancre de fixation en position repliée de sorte que le système de fixation peut être désolidarisé de la seconde pièce ; et

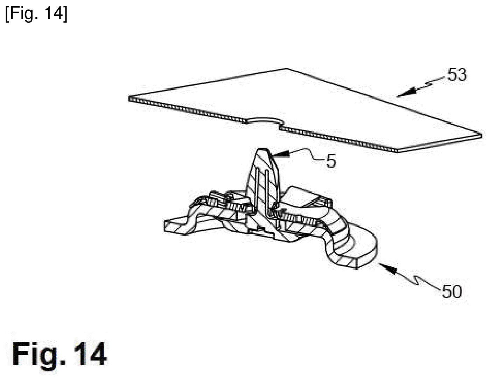

[Fig. 14] la [Fig. 14] est une représentation schématique en perspective et en coupe selon le plan AA' défini par les ailettes de l'ancre de fixation de l'ensemble de fixation de l'invention pour laquelle le système de fixation monté sur la première pièce est dégagé de l'orifice ménagé sur la seconde pièce.

### DESCRIPTION DETAILLEE

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent des variantes de l'invention mais qu'il peut exister d'autres modes de réalisation qui répondent à la définition de l'invention. En particulier, les figures et les exemples ci-après décrits portent sur un ensemble de fixation monté sur la face arrière d'un appui tête de siège de véhicule de transport ferroviaire de voyageurs, mais peut trouver application sur tout type de mobilier.

L'invention porte sur un ensemble de fixation qui comporte un système de fixation adapté pour être monté sur une première pièce, un panneau dans cet exemple de réalisation. Selon l'invention, le système de fixation est préalablement, et de façon imperdable, monté sur le panneau. Ce montage est ensuite fixé sur la seconde pièce, un châssis de véhicule automobile dans cet exemple de réalisation, de façon sécurisée mais également amovible par des moyens qui sont décrits ci-après, en formant l'ensemble de fixation de l'invention.

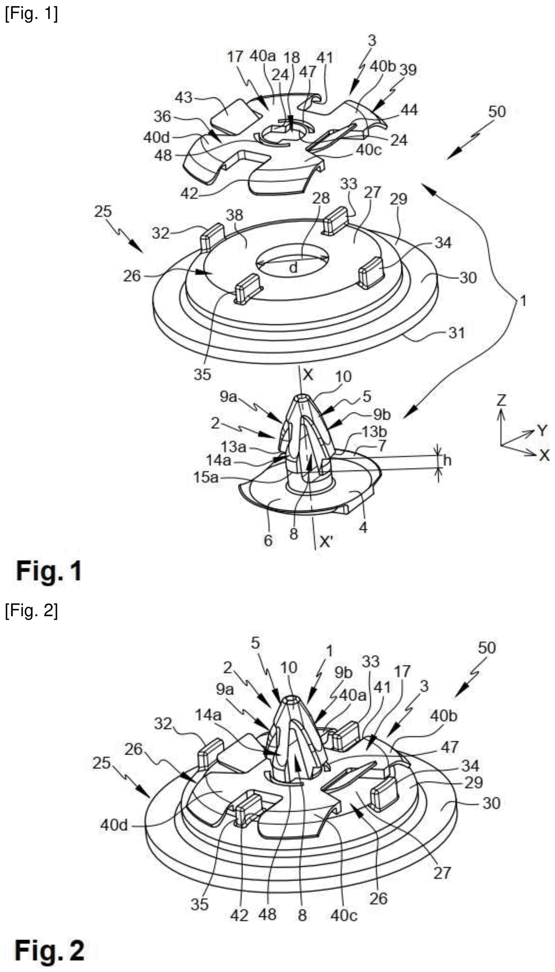

En référence aux figures 1 à 6, le système de fixation de l'invention 1 comporte deux pièces : une pièce d'ancrage 2 et une bague de maintien 3.

La pièce d'ancrage 2 présente une base 4 surmontée d'une ancre de fixation 5. La base 4 est circulaire et présente une partie centrale plane 6 et un bord périmétrique 7 sensiblement incliné du côté de l'ancre de fixation 5. L'ancre de fixation 5 s'étend selon un axe principal longitudinal XX' perpendiculaire au plan défini par la partie centrale 6 de la base 4. L'ancre de fixation 5 est en outre centrée sur la base 4.

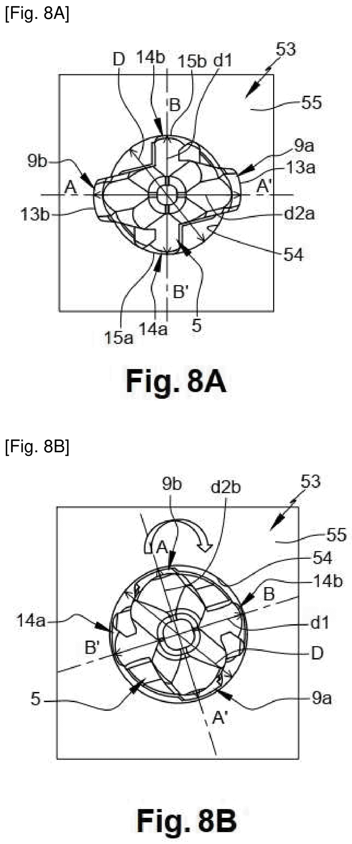

L'ancre de fixation 5 comporte un tronc central 8 et deux ailettes opposées 9a,9b qui s'étendent de part et d'autre du tronc central 8 dans un plan AA' (figures 8A et 8B) depuis l'extrémité supérieure 10 dudit tronc central 8 jusqu'à une extrémité libre inférieure 11a,11b. Le tronc central 8 et les ailettes 9a,9b présentent une forme générale de flèche. L'agencement des ailettes 9a,9b solidarisées à l'extrémité supérieure 10 du tronc central 8 forme moyens de rappel des ailettes 9a,9b dans une position dans laquelle leurs extrémités libres inférieures respectives 11a,11b sont le plus à distance du tronc central 8 de l'ancre 5. Ainsi, chaque ailette 9a,9b peut adopter une position repliée (figure 8B) vers le tronc central 8 lors qu'une pression est exercée sur la face externe respective 12a,12b des ailettes 9a,9b et dirigée vers le tronc central 8, et une position déployée d'équilibre (figure 8A) engendrée par l'action des moyens de rappel dans laquelle l'extrémité libre inférieure 11a,11b est à plus grande distance du tronc central 8.

En outre, la face externe 12a,12b de chaque ailette 9a,9b présente un épaulement 13a,13b situé à même distance de l'extrémité 10 du tronc central 8 et dont la fonctionnalité sera expliquée plus loin.

Comme visible sur les figures 8A et 8B, le tronc central 8 s'étend transversalement dans un plan BB' perpendiculaire au plan AA' formé par les ailettes 9a,9b en formant deux crêtes d'extrémité 14a,14b qui s'étendent sensiblement longitudinalement depuis l'extrémité 10 du tronc central 8. La face externe 15a,15b de chaque crête 14a,14b présente un épaulement 15a,15b situé à même distance de l'extrémité 10 du tronc central 8 et dont la fonctionnalité sera également expliquée plus loin. En référence à la figure 1, les épaulements 13a,13b des ailettes 9a,9b sont situés à plus proche distance de l'extrémité 10 du tronc central 8 que les épaulements 15a,15b des crêtes 14a,14b en définissant une hauteur h correspondant à l'épaisseur maximum de la seconde pièce destinée à être en prise entre les épaulements 13a,13b des ailettes 9a,9b et la bague de maintien 3 comme il sera expliqué plus loin.

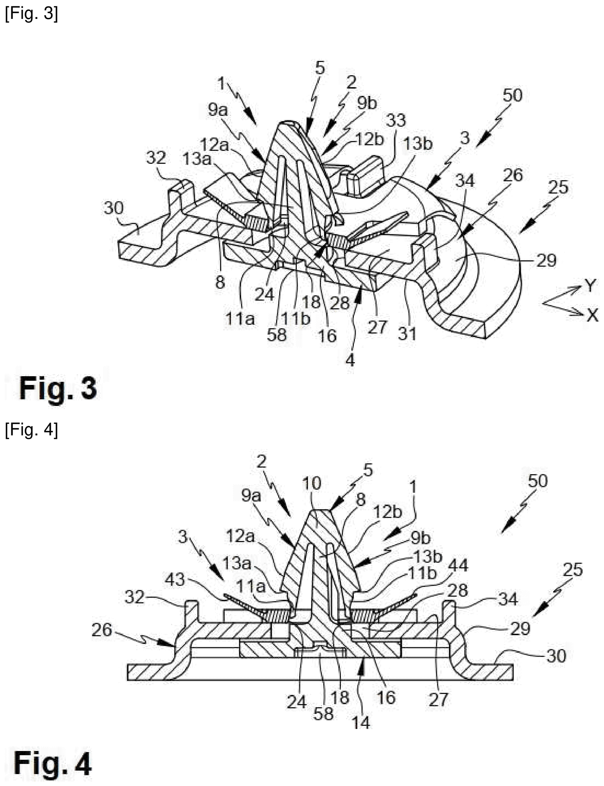

Enfin, la partie inférieure du tronc central 8 de l'ancre de fixation 5 comporte une embase de section circulaire 16 formant liaison de l'ancre de fixation 5 avec la base 4. Le diamètre de l'embase 16 est substantiellement inférieure au diamètre de la base 4 (figure 4).

La bague de maintien 3, destinée à être apposée sur le panneau, présente une forme sensiblement circulaire dont la structure précise sera décrite en lien avec le panneau dans le cadre de la description de l'ensemble de fixation. La bague 3 comporte une pièce principale de support 17 sur laquelle est ménagée un orifice traversant 18. On décrit en détail cet orifice traversant 18 et sa coopération avec la pièce d'ancrage 2 et plus particulièrement les ailettes 9a,9b de l'ancre de fixation 5.

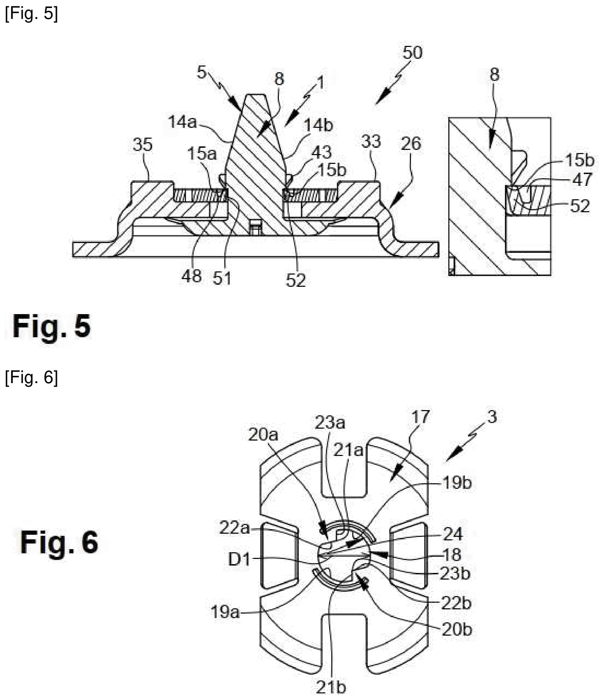

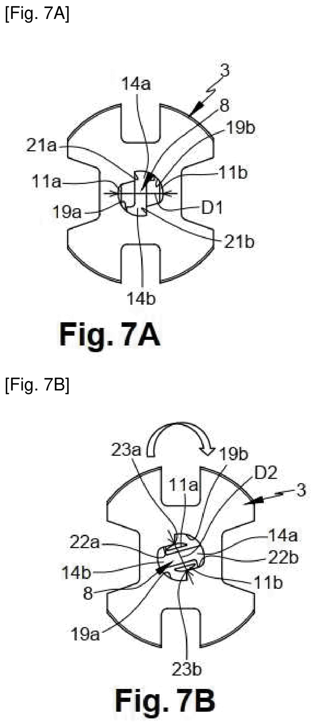

En référence plus particulièrement aux figures 6, 7A, 7B, 8A et 8B, l'orifice 18 de la bague de maintien 3 présente une forme qui permet, par pivotement de l'ancre de fixation 5 traversant cette orifice 18 relativement à la bague de maintien 3, de faire passer les ailettes 9a,9b de leur configuration déployée (figures 7A et 8A) à leur configuration repliée (figure 7B et 8B) dans laquelle l'ensemble de fixation se désolidarise du châssis de véhicule automobile.

Plus précisément, le bord périmétrique de l'orifice 18 de la bague de maintien 3 est fait de deux arcs de cercle opposés 19a, 19b et de deux épaulements rentrants opposés 20a,20b. Chaque épaulement 20a,20b présente une première paroi de butée 21a,21b et une seconde paroi de butée 22a,22b jointes par une arête de liaison 23a, 23b dirigée vers le centre de l'orifice 18. On considère ainsi deux diamètres d'intérêt pour l'orifice 18 : le première diamètre D1 entre les deux arcs de cercle opposés 19a,19b est le plus grand diamètre de l'orifice 18, et définit (figures 7A et 8A) le positionnement des extrémités libres 11a,11b des ailettes 9a,9b de l'ancre de fixation 5 en appui contre le bord interne 24 de l'orifice 18 au niveau des arcs de cercles opposés 19a, 19b en position déployée. Le second diamètre est le plus petit diamètre D2 entre les arêtes de liaison 23a,23b des épaulements 20a,20b qui définit (figures 7B et 8B) le positionnement des extrémités libres 11a,11b des ailettes 9a,9b de l'ancre de fixation 5 en appui contre le bord interne 24 de l'orifice 18 au niveau des arêtes de liaison 23a,23b en position repliée.

Dans ces deux configurations, les crêtes 14a,14b du tronc central 8 sont situées contre le bord interne 24 au niveau au niveau des arcs de cercles opposés 19a,19b, décalées d'un quart de tour entre les deux configurations.

Pour assurer le pivotement des extrémités libres 11a,11b des ailettes 9a,9b dans l'orifice 18 depuis leur position déployée (figures 7A et 8A) jusqu'à leur position repliée (figures 7B et 8B), la seconde paroi de butée 22a,22b de chaque épaulement 20a,20b présente une liaison courbée avec l'arc de cercle adjacent 19a,19b afin d'accompagner le pivotement des extrémités libres 11a,11b des ailettes 9a,9b depuis leur position déployée au niveau des arcs de cercle opposés 19a,19b jusqu'à leur position repliée au niveau des arêtes de liaison 23a,23b des épaulements 20a,20b. A l'inverse, la première paroi de butée 21a,21b de chaque épaulement 20a,20b présente une liaison franche formant un angle droit avec l'arc de cercle adjacent 19a,19b en empêchant les extrémités libres 11a,11b des ailettes 9a,9b d'atteindre les arêtes de liaison 23a,23b des épaulements 20a,20b du côté des premières parois de butée 21a,21b. En d'autres termes, le passage des extrémités libres 11a,11b des ailettes 9a,9b depuis leur position déployée (figures 7A et 8A) jusqu'à leur position repliée (figures 7B et 8B) n'est possible que via les secondes parois de butée 22a,22b des épaulements 20a,20b, c'est-à-dire dans un seul sens de pivotement.

Comme visible sur les figures 7A et 7B, lorsque les extrémités libres 11a,11b des ailettes 9a,9b sont dans leur position déployée (figure 7A), les crêtes 14a,14b du tronc central 8 sont en appui contre les premières parois de butée 21a,21b des épaulements 20a,20b, et lorsque les extrémités libres 11a,11b des ailettes 9a,9b sont dans leur position repliée (figure 7B), les crêtes 14a,14b du tronc central 8 sont en appui contre les secondes parois de butée 22a,22b des épaulements 20a,20b.

Ainsi, par pivotement de la pièce d'ancrage 2 relativement à la bague de maintien 3, les ailettes 9a,9b de l'ancre de fixation 5 de la pièce d'ancrage 2 passent de leur position déployée de plus grand diamètre d2a à leur position repliée de plus petit diamètre d2b.

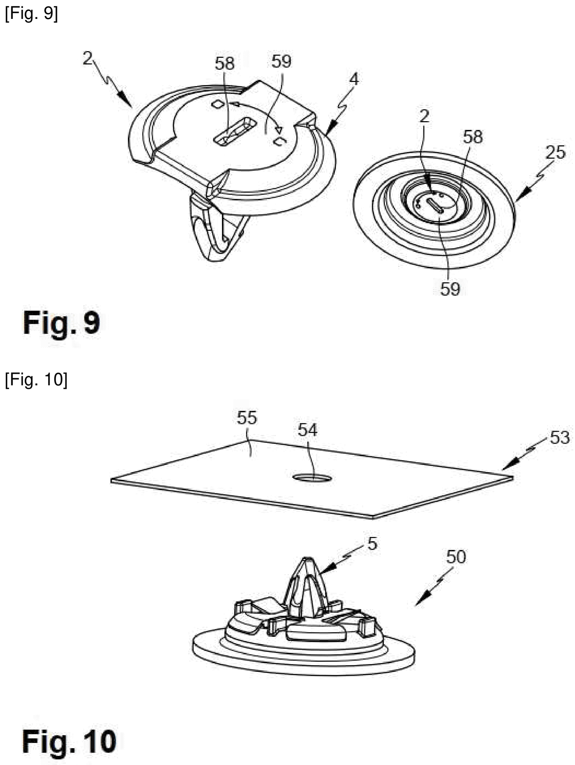

Selon l'invention, en référence aux figures 9A et 9B et de façon non limitative, la pièce d'ancrage 2 présente comme moyens de pivotement relativement à la bague de maintien 3 une rainure 58 qui est ménagée sur la face inférieure 59 de la base 4 de la pièce d'ancrage 2.

En référence à la figure 8A, le dimensionnement de l'ancre de fixation 5 est tel que la plus grande distance d1 entre les faces externes respectives 15,15b des crêtes opposées 14a,14b est inférieure à la distance d2a entre les épaulements 13a, 13b des ailettes 9a,9b en position déployée définissant le plus grand diamètre de l'ancre de fixation 5. En outre, et en référence à la figure 8B, le dimensionnement de l'ancre de fixation 5 est tel que la plus grande distance d1 entre les faces externes respectives 15,15b des crêtes opposées 14a,14b est sensiblement égale à la distance d2b entre les épaulements 13a, 13b des ailettes 9a,9b en position repliée.

On décrit à présent le montage comportant le système de fixation monté sur le panneau formant première pièce.

Selon cet exemple de réalisation et de façon non limitative, le panneau 25 formant première pièce, présente un embossage circulaire 26 définissant une partie circulaire supérieure plane en élévation 27 sur laquelle est ménagé un orifice circulaire traversant 28 qui est centré sur la partie supérieure plane en élévation 27, et un bord de liaison arrondi circulaire 29 qui s'étend depuis la partie supérieure plane 27 jusqu'à la partie principale du panneau 30 représentée partiellement sur les figures.

En utilisation, la bague de maintien 3 est apposée sur la partie supérieure plane 27 de l'embossage 26, l'orifice traversant 18 de la bague de maintien 3 coïncidant avec l'orifice 28 de l'embossage 26. Comme illustré sur les figures, la pièce d'ancrage 1, et plus particulièrement l'ancre de fixation 2, est destiné à traverser l'orifice 28 de l'embossage 26 du panneau 25 et l'orifice traversant 18 de la bague de maintien 3 depuis la face inférieure 31 du panneau 25. A cet effet, le diamètre d (figure 1) de l'orifice 28 de l'embossage 26 est au moins égal à la plus grande distance d1 entre les faces externes respectives 15,15b des crêtes opposées 14a,14b de l'ancre de fixation 5, mais également à la distance d2b entre les épaulements 13a, 13b des ailettes 9a,9b en position repliée (figures 8A et 8B) afin que l'ancre de fixation 5 puisse s'insérer dans les deux orifices 18,28. Le diamètre d de l'orifice 28 de l'embossage 26 est également au moins égal au diamètre de l'embase 16 de l'ancre de fixation 5 puisque cette embase 16 est destinée à être disposé au niveau de l'orifice 28.

Préférentiellement, le diamètre d de l'orifice 28 de l'embossage 26 est supérieur au diamètre de l'embase 16 de l'ancre de fixation 5 pour assurer le montage du dispositif de fixation 1 sur la première pièce 25 selon un jeu en X et Y contrôlé.

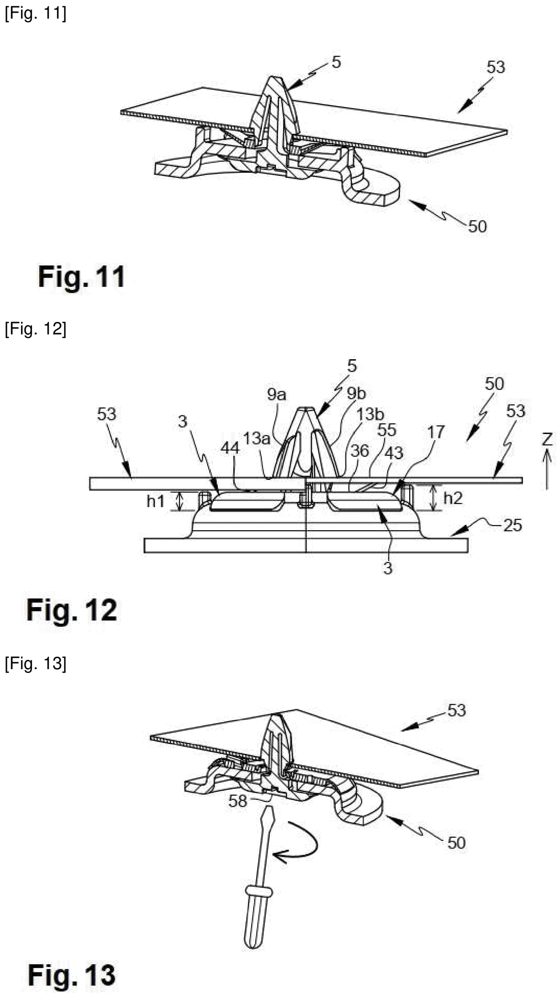

La partie supérieure plane 27 de l'embossage 26 présente, au niveau de sa périphérie circulaire, quatre butées 32,33,34,35 deux à deux diamétralement opposées et toutes les quatre régulièrement réparties le long de la périphérie circulaire de la partie supérieure plane 27 de l'embossage 26. Ces quatre butées 32,33,34,35 présentent une certaine hauteur h1,h2 (figure 12) établie selon l'épaisseur de la seconde pièce et permettant de réduire le jeu selon l'axe Z entre l'ensemble de fixation 50 et la seconde pièce. Les quatre butées 32,33,34,35 peuvent être autrement réparties sur la partie supérieure plane 27 de l'embossage 26.

Parmi ces quatre butées, deux butées 33,35 présentent une autre fonctionnalité en coopération avec la bague de maintien 3 assurant le pivotement de la pièce d'ancrage 2 relativement à la bague de maintien 3 pour désengager l'ensemble de fixation 50 de la seconde pièce. A cet effet, ces deux butées 33,35, formant butées de pivotement, s'étendent diamétralement sur la partie supérieure plane 27 de l'embossage 26. En outre, la pièce principale de support 17 de la bague de maintien 3 présente une partie principale plane 36 destinée à venir en appui sur la face supérieure 38 de la partie supérieure plane 27 de l'embossage 26 et un bord arrondi 39 de configuration générale circulaire, coopérant avec le bord de liaison arrondi circulaire 29 de l'embossage 26 du panneau 25. La pièce principale de support 17 de la bague de maintien 3 présente quatre pattes de maintien 40a,40b,40c,40d à l'embossage 26 définissant deux échancrures diamétralement opposées 41,42 qui, lorsque la bague de maintien 3 est apposée sur l'embossage 26 du panneau 25, entourent chacune une butée de pivotement 33,35 en s'opposant au pivotement de la bague de maintien 3 relativement au panneau 25, mais également à la pièce de fixation 2 puisque l'ensemble de fixation 50 forme un tout solidaire et indémontable.

De préférence, la largeur de chaque échancrure 41,42 est supérieure à la largeur de la butée de pivotement correspondante 33,35, de sorte que, en coopération avec le diamètre de l'embase 16 de l'ancre de fixation 2 qui est inférieur au diamètre d de l'orifice 28 de l'embossage 26 du panneau 25 permet de pouvoir monter le dispositif de fixation 1 sur le panneau 25 selon un jeu en X et Y contrôlé afin d'assurer la correspondance entre l'ensemble de fixation 50, et un orifice correspondant ménagé dans le châssis de véhicule automobile, en particulier lorsque plusieurs ensemble de fixation 50 sont prévues sur un panneau pour correspondre avec plusieurs orifices correspondants sur le châssis de véhicule automobile.

La bague de maintien 3 présente en outre deux pattes déformables 43,44 qui s'étendent obliquement jusqu'à une extrémité libre à distance de la partie plane 38 de l'embossage 26 du panneau 25 lorsque la bague de maintien 3 est apposée sur l'embossage 26, depuis la partie supérieure plane 27 de la pièce principale de support 17 jusqu'à un bord d'extrémité libre 45,46, lequel est apte à adopter une pluralité de positions plus ou moins à distance de ladite partie supérieure plane 27. Ces pattes déformables 43,44 garantissent, en plus des butées 32,33,34,35 de l'embossage 29 du panneau 25, un montage sans jeu en Z (figure 12) de l'ensemble de fixation 50 sur le châssis de véhicule automobile.

La bague de maintien 3 comporte en outre deux rainures 47,48 semi-circulaire en arc de cercle autour de l'orifice 18 de la bague de maintien 3 qui définissent deux nervures déformables 51,52 (figure 5) coopérant avec les épaulements 15a,15b des crêtes 14a,14b de l'ancre de fixation 5 pour garantir le caractère imperdable de la pièce d'ancrage 2 sur la bague de maintien 3 et donc du système de fixation 1 sur le panneau 25. Les rainures 47,48 peuvent prendre tout autre forme conférant cette même fonctionnalité, par exemple être rectiligne.

On décrit ci-après le montage préalablement du système de fixation sur le panneau en référence aux figures 1 à 5.

Comme illustré sur la figure 1, la bague de maintien 3 est apposée sur l'embossage 26 du panneau 25, les quatre pattes de maintien 40a,40b,40c,40d de la bague de maintien 3 étant agencées entre les butées 32,33,34,35 de l'embossage 26 et le bord arrondi 39 de la pièce principale de support 17 de la bague de maintien 3 étant apposé sur le bord de liaison arrondi circulaire 29 de l'embossage 26 du panneau 25. L'orifice 18 de la bague de maintien 3 est monté coïncidant avec l'orifice 28 de l'embossage 26 du panneau 25.

L'ancre de fixation 5 de la pièce d'ancrage 2 est inséré dans les deux orifices depuis la face inférieure 31 de l'embossage 26 du panneau 25 et, comme visible sur les figures 2 à 5, fait saillie du côté de la bague de maintien 3 de ces deux orifices 18 et 28. Au montage, l'ancre de fixation 5 traverse l'orifice 28 de l'embossage 26 ainsi que l'orifice 18 de la bague de maintien 3 jusqu'à ce que les épaulement 15a, 15b des crêtes 14a,14b viennent en appui sur les deux nervures déformables 51,52 de la bague de maintien (figure 5) ce qui permet d'éviter à la pièce de fixation 1 de pouvoir être désengagée de la bague de maintien, mais également du panneau 25.

Dans cette position, les ailettes 9a,9b sont en position déployée et les extrémités libres 11a,11b des ailettes 9a,9b sont en appui contre le bord interne de l'orifice 18 de la bague de maintien 3 dans la position représentée sur la figure 7A. L'embase 16 de l'ancre de fixation 5 est située au niveau de l'orifice 28 de l'embossage 26 du panneau 25, et la base 4 de la pièce d'ancrage 2 est plaquée contre la face inférieure 31 de l'embossage 26 du panneau 25. L'ensemble de fixation est ainsi solidarisé et rendu imperdable par la coopération des épaulements 15a, 15b des crêtes 14a,14b en appui sur les deux nervures déformables 51,52 de la bague de maintien 3.

On décrit ci-après le montage et le démontage de l'ensemble de fixation 50 sur le châssis de véhicule automobile 53 sur lequel est prévu un orifice circulaire 54. Selon l'invention, la présence d'un orifice 54 de forme circulaire présente l'avantage d'une simplicité de réalisation, tout en permettant de recevoir de façon amovible le système de fixation qui a été préalablement monté sur le panneau (première pièce).

Pour ce faire, l'orifice circulaire 54 du châssis 53 présente un diamètre D (figures 8A et 8B) au moins égal à la plus grande distance d1 entre les faces externes respectives 15,15b des crêtes opposées 14a,14b de l'ancre de fixation 5 de la pièce d'ancrage 2 mais également au moins égal à la distance d2b entre les épaulements 13a, 13b des ailettes 9a,9b en position repliée, ceci afin que l'ancre de fixation 5 puisse être insérée dans l'orifice 54 du châssis 53 mais puisse également être désolidarisée du châssis 53 au démontage. En revanche, le diamètre D de l'orifice 54 du châssis 53 est inférieur à la distance d2a entre les épaulements 13a, 13b des ailettes 9a,9b en position déployée (figure 8A) afin qu'à l'insertion de l'ancre de fixation 5 de la pièce d'ancrage 2 dans l'orifice 54 du châssis 53 (figure 11), les ailettes 9a,9b soient dans un premier temps en position repliée ou quasi repliée par la pression appliquée sur ces ailettes 9a,9b par l'orifice, mais que dès que les épaulements 13a,13b des ailettes 9a,9b ont traversé l'orifice 54, le châssis 53 soit maintenu solidaire à l'ancre de fixation 5, et donc à l'ensemble de fixation 50 par le positionnement des épaulements 13a,13b en prise sur la face supérieure 55 du châssis 53.

En référence à la figure 12, on constate que l'ensemble de fixation de l'invention peut s'adapter à différentes épaisseurs de châssis. Typiquement, on prévoit des épaisseurs de châssis variant entre 0,9 et 2,2 millimètres, la hauteur h1,h2 des butées 32,33,34,35 étant adaptées à l'épaisseur du châssis 50 pour réduire le jeu selon Z entre l'embossage 26 du panneau 25 et le châssis 50. On comprend par ailleurs que le châssis 50 est maintenu en prise entre les épaulements 13a, 13b des ailettes 9a,9b et les butées 32,33,34,35 ou la partie principale plane 36 de la pièce principale de support 17 de la bague de maintien 3 si la hauteur des butées 32,33,34,35 correspond à l'épaisseur de la partie principale plane 36 de la pièce principale de support 17 de la bague de maintien 3.

L'ensemble de fixation 50 est ainsi solidarisé au châssis 53 de façon sécurisée. Dans l'application visée à titre d'exemple, on comprend qu'une pluralité d'éléments de fixation 50 et d'orifices correspondants 54 dans le châssis 53 sont prévus pour assurer la solidarisation du panneau 35 sur le châssis à différents endroits du châssis 53.

Pour désolidariser l'ensemble de fixation 50 du châssis 53, il suffit d'insérer un objet adapté, par exemple un tournevis, dans la rainure 58 ménagée sur la face inférieure 59 et d'opérer un quart de tour. La coopération entre les butées de pivotement 33,35 de l'embossage 26 du panneau 25 et les échancrures 41, 42 de la bague de maintien 3 permettent de faire pivoter la pièce d'ancrage 2 relativement à la bague de maintien 3, au panneau 25 et au châssis 53.

Comme illustré sur les figures 7B et 8B et expliqué précédemment, ce pivotement de l'ancre de fixation 5 dans l'orifice 18 de la bague de maintien 3 fait passer les ailettes 9a,9b de leur position déployée (figures 7A et 8a) à leur position repliée (figures 7B et 8B). Dans cette dernière position, l'ancre de fixation 5 peut se désengager de l'orifice 54 du châssis 53 et l'élément de fixation 50 est désolidarisé du châssis 53 par un simple actionnement en quart de tour. L'élément de fixation 50 est alors prêt pour une nouvelle utilisation.

## Revendications

1. Ensemble de fixation d'une première pièce (25), par exemple un panneau, sur une seconde pièce (53), par exemple un châssis de véhicule automobile, comprenant un système de fixation (1) monté dans un orifice circulaire (28) ménagé sur la première pièce (25) et dans un orifice circulaire (54) en regard de l'orifice (28) de la première pièce (25) et ménagé sur la seconde pièce (53), lequel système de fixation (1) comprend :
- une pièce d'ancrage (2) comportant une base (4) surmontée d'une ancre de fixation (5) qui présente un tronc central (8) et au moins deux ailettes (9a,9b) s'étendant de part et d'autre et depuis ledit tronc central (8) jusqu'à une extrémité libre inférieure (11a,11b), chaque ailette (9a,9b) étant apte à adopter au moins une position repliée vers la tige centrale (8), et une position déployée d'équilibre dans laquelle l'extrémité libre inférieure (11a,11b) est à distance de la tige centrale (8), chaque ailette (9a,9b) présentant en outre une face externe (12a, 12b) dotée d'un épaulement de maintien (13a, 13b) de la seconde pièce (53), lesquels épaulements (13a, 13b) définissent entre eux une première distance (d2a) lorsque les ailettes (9a,9b) sont en position déployée et une seconde distance (d2b) lorsque les ailettes (9a,9b) sont en position repliée, la seconde distance (d2b) étant inférieure à la première distance (d2a) et
- une bague de maintien (3) apposée sur la face supérieure (25) de la première pièce (25) et en regard de la seconde pièce (53), laquelle bague de maintien (3) comporte un orifice traversant (18) qui coïncide avec l'orifice circulaire (28) de la première pièce (25) et qui est en regard de l'orifice circulaire (54) de la seconde pièce (53), et dans lesquels orifices (18,28,53) est logée l'ancre de fixation (5), la base (4) de la pièce d'ancrage (2) étant en appui contre la face inférieure (31) de la première pièce (25), le tronc central (8) de l'ancre de fixation (5) faisant saille des trois orifices traversants (18,28) en traversant successivement l'orifice circulaire (28) de la première pièce (25), l'orifice traversant (18) de la bague de maintien (3) et l'orifice circulaire (54) de la seconde pièce (53), les extrémités libres (11a,11b) des ailettes (9a,9b) étant en appui de contact contre le bord interne (24) de l'orifice traversant (18) de la bague de maintien (3), et les épaulements (13a, 13b) des ailettes (9a,9b) étant en prise sur la face supérieure (55) de la seconde pièce (53), lequel orifice traversant (18) de la bague de maintien (3) présente un premier diamètre (D1) pour lequel les ailettes (9a,9b) de l'ancre de fixation (5) sont en position déployée contre le bord interne (24) de l'orifice (18), et un second diamètre (D2) inférieur au première diamètre (D1), pour lequel les ailettes (9a,9b) de l'ancre de fixation (5) sont en position repliée, et le système de fixation (1) comporte des moyens de pivotement (58) de la pièce d'ancrage (2) relativement à la bague de maintien (3) qui assurent le passage de la position déployée à la position repliée des ailettes (9a,9b) au niveau de l'orifice traversant (18) de la bague de maintien (3), en ce que le diamètre de l'orifice traversant (28) de la première pièce (25) est au moins égal à la distance (d2b) entre les épaulements de maintien de la seconde pièce (13a, 13b) des ailettes (9a,9b) considérées en position repliée, et en ce que le diamètre (D) de l'orifice circulaire (54) de la seconde pièce (53) est au moins égal à la distance (d2b) entre les épaulements (13a, 13b) des ailettes (9a,9b) en position repliée, et inférieur à la distance (d2a) entre les épaulements (13a, 13b) des ailettes (9a,9b) en position déployée, de façon que le passage de la position déployée à la position repliée des ailettes (9a,9b) par rotation de la pièce d'ancrage (2) relativement à la bague de maintien (3) entraîne la désolidarisation du système de fixation (1) de la seconde pièce (53).

2. Ensemble de fixation selon la revendication précédente, **caractérisé en ce que** le tronc central (8) de l'ancre de fixation (5) s'étend transversalement dans un plan (BB') perpendiculaire à un plan (AA') formé par les deux ailettes (9a,9b) en formant deux crêtes opposées (14a, 14b), la face externe de chaque crête (14a, 14b) présentant un épaulement de fixation (15a, 15b) à la bague de maintien (3), lequel épaulement de fixation (15a, 15b) à la bague de maintien (3) définit, avec l'épaulement de maintien de la seconde pièce (13a,13b) ménagé sur la face externe (12a, 12b) de chaque ailette (9a,9b), une hauteur (h) correspondant à l'épaisseur maximum de la seconde pièce (53) destinée à être en prise entre les épaulements de maintien de la seconde pièce (53) et la bague de maintien (3).

3. Ensemble de fixation selon la revendication précédente, **caractérisé en ce que** la plus grande distance (d1) entre les faces externes respectives des crêtes opposées (14a, 14b) est inférieure à la distance (d2a) entre les épaulements de maintien de la seconde pièce (13a, 13b) des ailettes (9a,9b) en position déployée définissant le plus grand diamètre (d2a) de l'ancre de fixation (5).

4. Ensemble de fixation selon l'une quelconque des revendications 2 et 3, **caractérisé en ce que** le diamètre de l'orifice traversant (28) de la première pièce (25) et le diamètre (D) de l'orifice circulaire (54) de la seconde pièce (53) sont chacun au moins égal à la plus grande distance (d1) entre les faces externes respectives des crêtes opposées (14a, 14b).

5. Ensemble de fixation selon l'une quelconque des revendications précédentes, **caractérisé en ce que** les moyens de pivotement (58) de la pièce d'ancrage (2) relativement à la bague de maintien (3) comporte une rainure (58) ménagée sur la face inférieure (59) de la base (4) de la pièce d'ancrage (2).

6. Ensemble de fixation selon l'une quelconque des revendications précédentes, **caractérisé en ce que** la bague de maintien (3) comporte au moins une patte déformable (43,44) s'étendant obliquement depuis la pièce principale de support (17) jusqu'à un bord d'extrémité libre, laquelle patte déformable (43,44) est apte à adopter une pluralité de positions plus ou moins obliquement à distance de la pièce principale de support (17) de ladite bague de maintien (3).

7. Ensemble de fixation selon l'une quelconque des revendications précédentes, **caractérisé en ce que** la partie inférieure du tronc central (8) de l'ancre de fixation (5) présente une embase (16) qui est disposé au niveau de l'orifice traversant (28) de la première pièce (25), et dont le diamètre est inférieur au diamètre de l'orifice traversant (28) de la première pièce (25).

8. Ensemble de fixation selon l'une quelconque des revendications précédentes, **caractérisé en ce que** la première pièce (25) est un panneau qui présente un embossage circulaire (26) définissant une partie supérieure plane en élévation (27) sur laquelle est ménagé l'orifice traversant (28), et un bord de liaison arrondi circulaire (29), et **en ce que** la pièce principale de support (17) de la bague de maintien (3) présente une partie principale plane (36) en appui sur la face supérieure (27) de la partie plane (36) de l'embossage circulaire du panneau (26) et un bord arrondi de configuration générale circulaire (39) en appui sur au moins une partie du bord circulaire de liaison arrondi (29) de l'embossage (26).

9. Ensemble de fixation selon la revendication précédente, **caractérisé en ce que** la partie plane en élévation (27) de l'embossage (26) du panneau (25) présente deux butées diamétralement opposées (33,35), et **en ce que** la bague de maintien (3) présente deux échancrures diamétralement opposées (41,42) entourant chacune une butée (33,35), de sorte que la bague de maintien (3) soit maintenue fixe sur la première pièce (25) par contact en butée des échancrures (41,42) contre les butées correspondantes (33,35) lorsque la pièce d'ancrage (2) est actionnée en pivotement.

10. Ensemble de fixation selon la revendication précédente, **caractérisé en ce que** la largeur de chaque échancrure (41,42) est supérieure à la largeur de la butée correspondante (33,35), de sorte que, en coopération avec le diamètre de l'embase (16) de l'ancre de fixation (5) qui est inférieur au diamètre de l'orifice traversant (28) de la première pièce (25), le système de fixation (1) peut être monté sur la première pièce (25) selon un jeu contrôlé.

11. Ensemble de fixation selon l'une quelconque des revendications 8 et 9, **caractérisé en ce que** la partie plane en élévation (27) de l'embossage (26) de la première pièce (25) présente deux butées supplémentaires diamétralement opposées (32,34), la hauteur (h1,h2) des quatre butées (32,33,34,35) étant identique et adaptée à l'épaisseur de la seconde pièce (53) destinée à venir en prise dans l'ensemble de fixation.

12. Ensemble de fixation selon l'une quelconque des revendications précédentes, **caractérisé en ce que** la seconde pièce (53) est un châssis de véhicule automobile.
